# EUROPÄISCHE PATENTANMELDUNG

(11) **EP 2 048 381 A2**
(43) Veröffentlichungstag der Anmeldung: **15.04.2009**
(21) Anmeldenummer: 08105453.8
(22) Anmeldetag: 29.09.2008
(51) Int. Cl.: F16B 13/06

(54) **Befestigungselement**

(30) Priorität: 12.10.2007 DE 102007000859
(71) Anmelder: HILTI Aktiengesellschaft, 9494 Schaan (LI)
(72) Erfinder: Ayrle, Thomas, 86853, Langerringen (DE)
(74) Vertreter: Wildi, Roland

(57) **Zusammenfassung**

Ein Befestigungselement (11) zur Verankerung in einem Bohrloch eines Untergrundes weist einen Schaft (12) und eine den Schaft (12) umfassende Spreizhülse (21) auf. Der Schaft (12) weist an einem ersten Endbereich (13) ein Angriffsmittel (14) auf und ist an einem zweiten, dem ersten Endbereich (13) gegenüberliegenden Endbereich (15) mit einem Spreizteil (16) zum Aufweiten der Spreizhülse (21) versehen, das einen sich in Richtung des freien Endes des zweiten Endbereiches (15) des Schafts (12) erweiternden konischen Abschnitt (17) aufweist. Die Spreizhülse (21) weist mehrere Spreizlappen (23) auf, die voneinander durch von einem freien Ende (24) der Spreizhülse (21) ausgehende und sich über zumindest die Hälfte der Längserstreckung (L) der Spreizhülse (21) erstreckende Längsschlitze (25) getrennt sind. Die Spreizlappen (23) weisen eine Sicke (26) auf, deren Längserstreckung (F) zumindest der Hälfte der Längserstreckung (G) der Längsschlitze (25) entspricht.

## Beschreibung

Die Erfindung betrifft ein Befestigungselement zur Verankerung in einem Bohrloch eines Untergrundes mit einem Schaft und mit einer den Schaft umfassenden Spreizhülse, wobei der Schaft an einem ersten Endbereich ein Angriffsmittel aufweist und an einem zweiten, dem ersten Endbereich gegenüberliegenden Endbereich mit einem Spreizteil zum Aufweiten der Spreizhülse versehen ist, das einen sich in Richtung des freien Endes des zweiten Endbereiches des Schafts erweiternden konischen Abschnitt aufweist, und die Spreizhülse mehrere Spreizlappen aufweist, die voneinander durch von einem freien Ende der Spreizhülse ausgehende und sich über zumindest die Hälfte der Längserstreckung der Spreizhülse erstreckende Längsschlitze getrennt sind.

Derartige Befestigungselemente werden beispielsweise als Bolzen- oder Segmentanker bezeichnet und sind in einer wirtschaftlich vorteilhaften Ausführung als Blechhülsenanker ausgebildet. Die Befestigungselemente werden üblicherweise durch eine Durchführöffnung eines am Untergrund festzulegenden Anbauteils in den Untergrund eingeführt.

Aus der DE 636 609 ist ein gattungsgemässes Befestigungselement bekannt. Mit den bezogen auf die Längserstreckung der gesamten Spreizhülse langen Spreizlappen wird ein vorteilhaftes Aufweiten des Spreizbereichs und somit ein ausreichender Reibschluss zur Verankerung des Befestigungselementes im Untergrund gewährleistet. Der Durchmesser der Bohrung im Untergrund und der Durchführöffnung im Anbauteil wird durch den Aussendurchmesser der Spreizhülse bestimmt.

Nachteilig an der bekannten Lösung ist, dass der Aufwand zum Erstellen von Bohrlöchern von Durchmesser zu Durchmesser erheblich zunimmt.

Es ist bekannt, die Materialstärke der Spreizhülse klein zu halten, so dass ein Befestigungselement mit einem Schaftdurchmesser von z. B. 10 mm in ein Bohrloch von 12 mm setzbar ist. Derartige Spreizhülsen weisen für eine ausreichende Setzbarkeit Material- beziehungsweise Wandstärken von 0.6 bis 0.9 mm auf. Wird ein Befestigungselement mit einer derartigen Spreizhülse in das Bohrloch eingetrieben, kann sich die Spreizhülse beim Eintreiben deformieren, was zu Setzproblemen und gegebenenfalls zu Funktionsstörungen des Befestigungselementes führt.

Um Befestigungselemente mit Spreizhülsen zu versehen, die eine verhältnismässig grosse Wandstärke aufweisen, wird z. B. in der DE 35 08 015 A1 vorgeschlagen, den Schaft bereichsweise benachbart zu dem Spreizteil zu verjüngen und die Spreizhülse in diesem Bereich vorzusehen.

Nachteilig an der bekannten Lösung ist, dass der Nutzquerschnitt des Schaftes im Bereich der Spreizhülse reduziert ist und die Erstellung der Verjüngung am Schaft zusätzliche Bearbeitungsschritte an dem Schaft erfordert.

Aufgabe der Erfindung ist es, ein Befestigungselement mit einer Spreizhülse mit geringer Materialstärke zu schaffen, wobei das Befestigungselement leicht setzbar und einfach zu fertigen ist.

Die Aufgabe ist durch die Merkmale des unabhängigen Anspruchs gelöst. Vorteilhafte Weiterbildungen sind in den Unteransprüchen dargelegt.

Gemäss der Erfindung weisen die Spreizlappen zumindest eine Sicke auf, deren Längserstreckung zwischen den Längsschlitzen zumindest der Hälfte der Längserstreckung der Längsschlitze entspricht.

Die zu der Längsachse des Befestigungselementes verlaufenden Sicken auf den Spreizlappen erhöhen das Flächenträgheitsmoment des Querschnitts der Spreizhülse im Spreizbereich und somit auch die Biegesteifigkeit der Spreizlappen. Die Gefahr einer Deformation der Spreizlappen beim Eintreiben des Befestigungselementes in das Bohrloch ist trotz der Verwendung einer Spreizhülse mit geringer Material- beziehungsweise Wandstärke massgeblich reduziert. Infolge der langen und dünnen Spreizlappen ist ein ausreichender Reibschluss des Befestigungselementes im Untergrund im verspannten Zustand gewährleistet, wobei die Setzbarkeit des Befestigungselementes auch in engen Bohrlöchern oder in hochfesten Untergründen gewährleistet ist. Zudem ergeben sich durch die steifere Spreizhülse höhere Lastwerte auch in niederfesten Untergründen.

Vorzugsweise erweitert die zumindest eine Sicke die Spreizhülse umfangseitig, so dass der Aussendurchmesser der Spreizhülse im unverspannten Zustand bereichsweise durch die zumindest eine Sicke vergrössert ist. Beim Eintreiben des Befestigungselementes in das Bohrloch kommt die zumindest eine Sicke mit der Bohrlochwandung in Anlage und drückt den entsprechenden Spreizlappen an den Schaft beziehungsweise an das Spreizteil, so dass das freie Ende des Spreizlappens beim Eintreiben des Befestigungselementes nicht an Überständen im Bohrloch ansteht und sich der Spreizlappen vor Beginn des Spreizvorgangs deformiert.

Bevorzugt ist das dem Ende der Längsschlitze zugewandte Ende der zumindest einen Sicke zur Öffnung der Längsschlitze am freien Ende der Spreizhülse hin in einem Abstand zu dem Ende der Längsschlitze angeordnet. Die Erhöhung der Steifigkeit der Spreizlappen erfolgt dabei lediglich im Bereich benachbart zum freien Ende der Spreizhülse bis zu einem rückwärtigen Abschnitt, wobei der verbleibende Bereich zur Ausbildung eines vorteilhaften Biegegelenks für den Spreizlappen beim Aufweiten der Spreizhülse ohne eine Verstärkung zur Verfügung steht.

Vorzugsweise ist in der Axialprojektion der zumindest einen Sicke zumindest ein Drehsicherungsmittel vorgesehen, das den Reibschluss der Spreizhülse zur Bohrlochwandung auch bei variierendem Bohrlochdurchmesser sicherstellt, ohne den Setzwiderstand des Befestigungselementes massgeblich zu erhöhen. Das Drehsicherungsmittel ist vorteilhaft in der axialen Verlängerung der zumindest einen Sicke angeordnet.

Bevorzugt ist das zumindest eine Drehsicherungsmittel im Umfangsbereich zwischen dem dem Ende der Längsschlitze zugewandten Ende der zumindest einen Sicke und dem Ende der Längsschlitze vorgesehen. Das Aufweiten des von den Spreizlappen gebildeten Spreizbereichs wird durch das zumindest eine Drehsicherungsmittel nicht behindert beziehungsweise beeinflusst.

Vorzugsweise ist das zumindest eine Drehsicherungsmittel ein radial nach aussen abragender Wandabschnitt der Spreizhülse. Der Wandabschnitt ist vorteilhaft dreiseitig aus der Wandung der Spreizhülse ausgestanzt und nach aussen gebogen, wobei der Abstand des Wandabschnitts zur Aussenwandung entgegen der Setzrichtung zunimmt. Alternativ ist das zumindest eine Drehsicherungsmittel als eine Ausprägung ausgebildet, welche die Axialprojektion der Spreizhülse bereichsweise überragt.

Bevorzugt weist jeder Spreizlappen jeweils zumindest eine Sicke auf, womit die Spreizhülse in ihrem gesamten Spreizbereich vorteilhafte Biegesteifigkeiten aufweist.

Die Erfindung wird nachstehend anhand eines Ausführungsbeispieles näher erläutert. Es zeigen:
- Fig. 1: Ein Befestigungselement in Seitenansicht; und

- Fig. 2: einen Längsschnitt durch die Spreizhülse gem. Linie II-II in Fig. 1.

Grundsätzlich sind in den Figuren gleiche Teile mit den gleichen Bezugszeichen versehen.

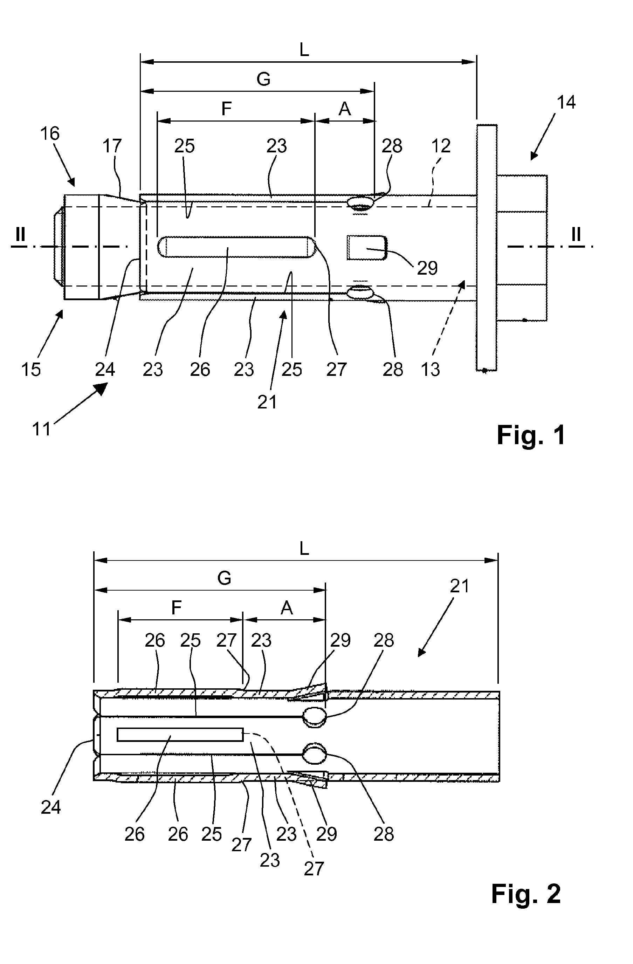

Das in den Figuren 1 und 2 dargestellte Befestigungselement 11 zur Verankerung in einem Bohrloch eines Untergrundes weist einen Schaft 12 und eine umfänglich am Schaft 12 angeordnete Spreizhülse 21 auf. Der Schaft 12 weist an einem ersten Endbereich 13 ein Angriffsmittel 14 in Form eines Drehangriffsmittels für ein hier nicht dargestelltes Setzwerkzeug mit einer angepressten Unterlegscheibe auf. An einem zweiten, dem ersten Endbereich 13 gegenüberliegenden Endbereich 15 des Schafts 12 ist ein Spreizteil 16 zum Aufweiten der Spreizhülse 21 vorgesehen, das einen sich in Richtung des freien Endes des zweiten Endbereiches 15 des Schafts 12 erweiternden konischen Abschnitt 17 aufweist.

Die Spreizhülse 21 weist mehrere Spreizlappen 23 auf, die voneinander durch von einem freien Ende 24 der Spreizhülse 21 ausgehende und sich über zumindest die Hälfte der Längserstreckung L der Spreizhülse 21 erstreckende Längsschlitze 25 getrennt sind. An den Spreizlappen 23 ist jeweils eine Sicke 26 vorgesehen, deren Längserstreckung F zwischen den Längsschlitzen 25 zumindest der Hälfte der Längserstreckung G der Längsschlitze 25 entspricht. Die Sicken 26 erweitern die Spreizhülse 21 umfangseitig beziehungsweise nach radial aussen.

Das dem Ende 28 der Längsschlitze 25 zugewandte Ende 27 der Sicke 26 zur Öffnung der Längsschlitze 25 am freien Ende 24 der Spreizhülse 21 hin ist in einem Abstand A zu dem Ende 28 der Längsschlitze 25 angeordnet. In der Axialprojektion einzelner Sicken 26 und im Umfangsbereich zwischen dem dem Ende 28 der Längsschlitze 25 zugewandten Ende 27 der zumindest einen Sicke 26 und dem Ende 28 der Längsschlitze 25 ist jeweils ein Drehsicherungsmittel 29 vorgesehen. Das Drehsicherungsmittel 29 ist jeweils ein radial nach aussen abragender Wandabschnitt der Spreizhülse 21.

## Patentansprüche

1. Befestigungselement zur Verankerung in einem Bohrloch eines Untergrundes mit einem Schaft (12) und mit einer den Schaft (12) umfassenden Spreizhülse (21), wobei
der Schaft (12) an einem ersten Endbereich (13) ein Angriffsmittel (14) aufweist und an einem zweiten, dem ersten Endbereich (13) gegenüberliegenden Endbereich (15) mit einem Spreizteil (16) zum Aufweiten der Spreizhülse (21) versehen ist, das einen sich in Richtung des freien Endes des zweiten Endbereiches (15) des Schafts (12) erweiternden konischen Abschnitt (17) aufweist, und
die Spreizhülse (21) mehrere Spreizlappen (23) aufweist, die voneinander durch von einem freien Ende (24) der Spreizhülse (21) ausgehende und sich über zumindest die Hälfte der Längserstreckung (L) der Spreizhülse (21) erstreckende Längsschlitze (25) getrennt sind, **dadurch gekennzeichnet, dass**
die Spreizlappen (23) zumindest eine Sicke (26) aufweisen, deren Längserstreckung (F) zumindest der Hälfte der Längserstreckung (G) der Längsschlitze (25) entspricht.

2. Befestigungselement nach Anspruch 1, **dadurch gekennzeichnet, dass** die zumindest eine Sicke (26) die Spreizhülse (21) umfangseitig erweitert.

3. Befestigungselement nach Anspruch 1 oder 2, **dadurch gekennzeichnet, dass** das dem Ende (28) der Längsschlitze (25) zugewandte Ende (27) der zumindest einen Sicke (26) zur Öffnung der Längsschlitze (25) am freien Ende (24) der Spreizhülse (21) hin in einem Abstand zu dem Ende (28) der Längsschlitze (25) angeordnet ist.

4. Befestigungselement nach Anspruch 3, **dadurch gekennzeichnet, dass** in der Axialprojektion der zumindest einen Sicke (26) zumindest ein Drehsicherungsmittel (29) vorgesehen ist.

5. Befestigungselement nach Anspruch 4, **dadurch gekennzeichnet, dass** das zumindest eine Drehsicherungsmittel (29) im Umfangsbereich zwischen dem dem Ende (28) der Längsschlitze (25) zugewandten Ende (27) der zumindest einen Sicke (26) und dem Ende (28) der Längsschlitze (25) vorgesehen ist.

6. Befestigungselement nach Anspruch 4 oder 5, **dadurch gekennzeichnet, dass** das zumindest eine Drehsicherungsmittel (29) ein radial nach aussen abragender Wandabschnitt der Spreizhülse (21) ist.

7. Befestigungselement nach einem der Ansprüche 1 bis 6, **dadurch gekennzeichnet, dass** jeder Spreizlappen (23) jeweils zumindest eine Sicke (26) aufweisen.
